# EUROPÄISCHE PATENTSCHRIFT

(11) **EP 1 971 446 B1**
(45) Veröffentlichungstag und Bekanntmachung des Hinweises auf die Patenterteilung: **12.01.2011**
(21) Anmeldenummer: 06807837.7
(22) Anmeldetag: 24.11.2006
(51) Int. Cl.: B05D 7/00, B05D 7/04, C09D 183/02, C08K 3/22, C08K 9/02, C08J 7/04, D21H 27/20, D21H 19/32, C09D 1/00, C01B 33/16

(54) **KERAMISCHE WANDVERKLEIDUNGSVERBÄNDE MIT IR-STRAHLUNG REFLEKTIERENDEN EIGENSCHAFTEN**
CERAMIC WALL CLADDING COMPOSITES THAT REFLECT IR RADIATION
STRUCTURES CÉRAMIQUES D'HABILLAGE MURAL PRÉSENTANT DES PROPRIÉTÉS DE BLINDAGE ÉLECTROMAGNÉTIQUE

(30) Priorität: 11.01.2006 DE 102006001640
(43) Veröffentlichungstag der Anmeldung: 24.09.2008
(73) Patentinhaber: Evonik Degussa GmbH, 45128 Essen (DE)
(72) Erfinder: NUN, Edwin, 48727 Billerbeck (DE); BERGANDT, Heike, 45772 Marl (DE); GUTSCH, Andreas, 59348 Lüdinghausen (DE); GEIPEL, Gerhard, 45721 Haltern am See (DE)
(86) Internationale Anmeldenummer: PCT/EP2006/068864
(87) Internationale Veröffentlichungsnummer: WO 2007/087910

(56) Entgegenhaltungen:
- EP-A- 1 591 503
- WO-A-98/51747
- DE-A1- 4 213 747
- DE-A1-102004 006 612
- US-A- 4 215 168
- US-A- 4 433 025
- PATENT ABSTRACTS OF JAPAN Bd. 2000, Nr. 23, 10. Februar 2001 (2001-02-10) & JP 2001 159099 A (JSR CORP), 12. Juni 2001 (2001-06-12)
- PATENT ABSTRACTS OF JAPAN Bd. 2000, Nr. 18, 5. Juni 2001 (2001-06-05) & JP 01 006198 A (MATSUSHITA ELECTRIC WORKS LTD), 10. Januar 1989 (1989-01-10)
- PATENT ABSTRACTS OF JAPAN Bd. 017, Nr. 551 (C-1117), 5. Oktober 1993 (1993-10-05) & JP 05 156055 A (SHOWA DENKO KK), 22. Juni 1993 (1993-06-22)

## Beschreibung

Der Gegenstand der vorliegenden Erfindung betrifft ein Verfahren zur Herstellung von beschichteten Substraten mit IR-Strahlung reflektierenden Eigenschaften, sowie Substrate, erhältlich nach dem vorgenannten Verfahren.

Seit der Sesshaftwerdung der Menschen existieren Anstrengungen Wärme in Häusern entweder zu speichern oder selbige am Zutritt zu hindern. In der Vergangenheit wird z.B. durch zwei von einer Luftschicht getrennte Mauern eine gewisse Vergleichmäßigung der Innentemperaturen eines Hauses erreicht.

Bekannt ist, dass Spiegel sowohl sichtbares Licht, als auch IR-Strahlung reflektieren. Die Auskleidung eines Raumes mit Spiegeln ist aber nicht praktikabel.

Metallfolien, die in einem Raum hinter Putz angebracht sind stellen ein seit vielen Jahren bekanntes Mittel dar um einen Wärmeverlust, insbesondere hinter Heizkörpern zu reduzieren. Nachteilig ist jedoch die schlechte Haftung der Metallfolien mit dem Putz bzw. einer Wand.

Anstriche mit IR-Strahlung reflektierenden Substanzen sind ebenfalls bekannt. Nachteilig ist es jedoch, dass solche Anstriche immer zu unifarbenen, oft glänzenden Oberflächen führen. Ein Dekor ist nicht frei wählbar.

Das Einbringen von Metallpulver in Baumaterialien führt seht oft zu Korrosionsproblemen. Diese äußern sich oft durch den Verlust der mechanischen Eigenschaften der Bausubstanz und/oder durch Verfärbungen.

Die technische Aufgabe der vorliegenden Erfindung liegt darin, die Nachteile des Standes der Technik zu überwinden und insbesondere soll ein beschichtetes Substrat mit IR-Strahlung reflektierenden Eigenschaften sowie ein Verfahren zu seiner Herstellung bereitgestellt werden, bei dem eine Abschirmung vor IR-Strahlung sicher gewährleistet ist, das Substrat kostengünstiger hergestellt werden kann und bei dem die Auskleidung von Räumen vereinfacht ist. Zusätzlich soll der Mengenanteil an Substanz, die die Abschirmung der IR-Strahlung bewirkt, verringert werden.

Die technische Aufgabe der vorliegenden Erfindung wird gelöst durch ein Verfahren zur Beschichtung von Substraten umfassend die Schritte:
a) Bereitstellung eines Substrates,
b) Aufbringung einer Zusammensetzung auf mindestens einer Seite des Substrates, die Zusammensetzung enthält eine anorganische Verbindung, wobei die anorganische Verbindung mindestens ein Metall und/oder Halbmetall ausgewählt aus der Gruppe Sc, Y, Ti, Zr, Nb, V, Cr, Mo, W, Mn, Fe, Co, B, Al, In, Tl, Si, Ge, Sn, Zn, Pb, Sb, Bi oder Mischungen derselben und mindestens ein Element ausgewählt aus der Gruppe Te, Se, S, O, Sb, As, P, N, C, Ga oder Mischungen derselben enthält,
c) Trocknen der in Schritt b) aufgebrachten Zusammensetzung,
d) Aufbringung mindestens einer Beschichtung auf der mindestens einen Seite des Substrates, auf der in Schritt b) die Zusammensetzung aufgebracht wurde, wobei die Beschichtung ein Silan der allgemeinen Formel (Z¹)Si(OR)₃, wobei Z¹ R, OR oder Gly (Gly=3-Glycidyloxypropyl) ist und R ein Alkylrest mit 1 bis 18 Kohlenstoffatomen ist und alle R gleich oder unterschiedlich sein können, Oxidpartikel, ausgewählt aus den Oxiden von Ti, Si, Zr, Al, Y, Sn, Zn, Ce oder Mischungen derselben, und einen Initiator enthält, wobei in der Beschichtung vorzugsweise 3-Aminopropyltrimethoxysilan und/oder 3-Aminopropyltriethoxysilan und/oder N-2-Aminoethyl-3-aminopropyltrimethoxysilan enthalten ist, und
e) Trocknen der in Schritt d) aufgebrachten Beschichtung, wobei die Zusammensetzung des Schrittes b) und/oder die Beschichtung des Schrittes d) mindestens ein IR-Strahlung reflektierendes Pigment enthält und das IR-Strahlung reflektierende Pigment einen Kern aufweist, wobei auf dem Kern eine den elektrische Strom leitende Schicht enthaltend Zinnoxide und/oder Titanoxide aufgebracht ist.

Das Verfahren der vorliegenden Erfindung ist auf keine spezifischen Substrate limitiert. Die Substrate können sowohl offenporig als auch geschlossenporig sein. Das Substrat in Schritt a) kann vorzugsweise ein flexibles und/oder starres Substrat sein. In einer bevorzugten Ausführungsform ist das Substrat in Schritt a) ein Gewirke, ein Gewebe, ein Geflecht, eine Folie, ein Flächengebilde und/oder ein Blech. Es ist auch bevorzugt, dass das Substrat ein Papiersubstrat ist.

Vorzugsweise ist das Substrat in Schritt a) bei einer Temperatur größer als 100°C im Wesentliche temperaturstabil. In einer weiter bevorzugten Ausführungsform ist das Substrat in Schritt a) unter den Trocknungsbedingungen der Schritte c) und/oder e) im Wesentlichen temperaturstabil. Unter dem Begriff "temperaturstabil" wird in diesem Sinne verstanden, dass sich die Struktur des Substrats durch die Trocknung der aufgebrachten Beschichtungen im Wesentlichen nicht ändert.

In einer bevorzugten Ausführungsform wird die anorganische Verbindung des Schrittes b) ausgewählt aus TiO₂, Al₂O₃, SiO₂, ZrO₂, Y₂O₃, BC, SiC, Fe₂O₃, SiN, SiP, Alumosilicaten, Aluminiumphosphaten, Zeolithen, partiell ausgetauschten Zeolithen oder Mischungen derselben. Bevorzugte Zeolithe sind z.B. ZSM-5, Na-ZSM-5 oder Fe-ZSM-5 oder amorphe mikroporöse Mischoxide, die bis zu 20 Prozent nicht hydrolysierbare organische Verbindungen enthalten können, wie z.B. Vanadinoxid-Siliciumoxid-Glas oder Aluminiumoxid-Siliciumoxid-Methylsiliciumsesquioxid-Gläser.

Vorzugweise weist die anorganische Verbindung des Schrittes b) eine Korngröße von 1 nm bis 10.000 nm auf, weiter bevorzugt von 5 nm bis 5.000 nm, vorzugsweise von 10 nm bis 2.000 nm, in einer weiteren bevorzugten Ausführungsform von 10 nm bis 1.000 nm, vorzugsweise von 15 nm bis 700 nm, und am meisten bevorzugt von 20 nm bis 500 nm. Es kann vorteilhaft sein, wenn der erfindungsgemäße Verbundwerkstoff zumindest zwei Korngrößenfraktionen der zumindest einen anorganischen Verbindung aufweist. Ebenso kann es vorteilhaft sein, wenn das erfindungsgemäß Substrat zumindest zwei Korngrößenfraktionen von zumindest zwei anorganischen Verbindungen aufweist. Das Korngrößenverhältnis kann von 1:1 bis 1:10.000, vorzugsweise von 1:1 bis 1:100 betragen. Das Mengenverhättnis der Korngrößenfraktionen in der Zusammensetzung des Schrittes b) kann vorzugsweise von 0,01:1 bis 1:0,01 betragen. Die Zusammensetzung des Schrittes b) ist vorzugsweise eine Suspension, die vorzugsweise eine wässrige Suspension ist. Die Suspension kann vorzugsweise eine Flüssigkeit, ausgewählt aus Wasser, Alkohol, Säure oder eine Mischung derselben enthalten.

Die anorganische Verbindung des Schrittes b) wird vorzugsweise durch Hydrolysieren einer Vorstufe der anorganischen Verbindung, enthaltend das Metall und/oder Halbmetall, erhalten. Das Hydrolysieren kann z.B. durch Wasser und/oder Alkohol erfolgen. Bei der Hydrolyse kann ein Initiator vorhanden sein, der vorzugsweise eine Säure oder Base ist, welche vorzugsweise eine wässrige Säure oder Base ist.

Vorzugsweise wird die Vorstufe der anorganischen Verbindung ausgewählt aus Metallnitrat, Metallhalogenid, Metallcarbonat, Metallalkoholat, Metallhalogenid, Halbmetallalkoholat oder Mischungen derselben. Bevorzugte Vorstufen sind z.B. Titanalkoholate, wie z.B. Titanisopropylat, Siliciumalkoholate, wie z.B. Tetraethoxysilan, Zirkoniumalkoholate. Bevorzugte Metallnitrate sind z.B. Zirkoniumnitrat. In einer vorteilhaften Ausführungsform ist in der Zusammensetzung in Bezug auf die hydrolysierbare Vorstufe, bezogen auf die hydrolysierbare Gruppe der Vorstufe, zumindest das halbe Molverhältnis Wasser, Wasserdampf oder Eis, enthalten.

In einer bevorzugten Ausführungsform ist die Zusammensetzung des Schrittes b) ein Sol. In einer bevorzugten Ausführungsform ist es möglich handelsübliche Sole, wie z.B. Titannitratsol, Zirkonnitratsol oder Silicasol, zu verwenden.

In einer weiter bevorzugten Ausführungsform enthält die den elektrischen Strom leitende Schicht des IR-Strahlung reflektierenden Pigments mit mindestens einem Halogen dotiertes Zinnoxid und/oder Titanoxid, wobei das Halogen vorzugsweise ausgewählt ist aus Fluor, Chlor, Brom, Jod, oder Mischungen derselben.

Vorzugsweise wird der Kern des IR-Strahlung reflektierenden Pigments im wesentlichen vollständig und vorzugsweise vollständig von der elektrisch leitfähigen Schicht umhüllt.

In einer bevorzugten Ausführungsform ist das mindestens eine IR-Strahlung reflektierende Pigment in der Zusammensetzung des Schrittes b) enthalten. Weiter bevorzugt ist das mindestens eine IR-Strahlung reflektierende Pigment in der Beschichtung des Schrittes d) enthalten. Vorzugsweise ist das mindestens eine IR-Strahlung reflektierende Pigment in der Zusammensetzung des Schrittes b) und in der Beschichtung des Schrittes d) enthalten.

Der Kern des IR-Strahlung reflektierenden Pigments kann Metalloxide und/oder Siliziumoxide enthalten. Der Kern kann plättchenförmig oder auch nicht plättchenförmig sein. Plättchenförmige Kerne, welche bevorzugt sind weisen vorzugsweise in der Hauptdimension eine Ausdehnung von weniger als 500 µm auf und insbesondere von weniger als 250 µm auf, und die Dicke beträgt vorzugsweise weniger als 10 µm, insbesondere nicht mehr als 5 µm und ganz besonders 0,1 µm bis 3 µm. Das Verhältnis aus der Ausdehnung in der Hauptdimension zur Dicke (aspect ratio) beträgt bei den Plättchenförmigen Substraten vorzugsweise mehr als 3 und weiter bevorzugt mehr als 5.

Der Kern kann z.B. SiO₂ und/oder Metalloxide wie z.B. Fe₂O₃ TiO₂, MTiO₃, worin M = Mg, Ca, Ba, Sr ist und/oder Al₂O₃ und/oder BaSO₄ und/oder CaSO₄ enthalten. Der Kern basiert vorzugsweise auf plättchenförmigen und/oder transparenten oder semitransparenten Substraten, wie z.B. Glimmer, Talkum, Kaolin, Glas oder anderen silikatischen Materialien. Daneben können auch Metallplättchen, wie z.B: Aluminiumplättchen oder plättchenförmige Metalloxide, wie z.B. plättchenförmiges Eisenoxid oder Wismutoxychlorid den Kern bilden.

Vorzugsweise ist zwischen dem Kern des IR-Strahlung reflektierenden Pigments und der den elektrischen Strom leitenden Schicht mindestens eine isolierende Schicht angeordnet. Die isolierende Schicht kann vorzugsweise eine hydratisierte Siliziumdioxidschicht oder ein anderes unlösliches Silikat enthalten. Die Aufbringung dieser isolierenden Schicht erfolgt vorzugsweise nach dem in der EP 0,375,575 angegebenen Verfahren. Der Kern kann aber vorzugsweise auch zunächst mit einer oder mehreren Schichten aus z.B. Chromoxid, Eisenoxid, Zirkoniumoxid, Aluminiumoxid, Zinnoxid und/oder weiteren farblosen oder farbigen Metalloxide überzogen werden.

Vorzugsweise enthält die isolierende Schicht etwa 3-6 Gew.% SiO₂, weiter bevorzugt etwa 5 Gew.-% SiO₂, bezogen auf die Gesamtmasse des IR-Strahlung reflektierenden Pigments.

In einer bevorzugten Ausführungsform weist das Material, aus der die isolierende Schicht hergestellt ist eine Leitfähigkeit von kleiner 10⁻⁶ S/cm, weiter bevorzugt von kleiner 5x10⁻⁷ S/cm und am meisten bevorzugt von kleiner 10⁻⁷ S/cm auf. Die spezifische Leitfähigkeit kann gemäß der Lehre der DE 42 13 747 A1 bestimmt werden, wobei der spezifische Widerstand in die spezifische Leitfähigkeit umgerechnet wird.

Die den elektrischen Strom leitende Schicht kann sowohl mit Halogen dotiertes Zinn- oder Titanoxid enthalten oder aber eine Mischung aus den vorgenannten Oxiden enthalten. Es können beliebig zusammengesetzte Mischoxide aus SnO₂₋ₓ Xₓ und/oder TiO₂₋ₓ Xₓ verwendet werden, wobei X ausgewählt ist aus Fluor, Chlor, Brom, Jod oder Mischungen derselben und x kleiner als 2 und größer 0 ist.

Die den elektrischen Strom leitende Schicht kann vorzugsweise auch weitere Metalloxide wie z.B. Chromoxid, Eisenoxid, Zirkoniumoxid, Aluminiumoxid, Zinnoxid enthalten um z. B die mechanische Stabilität zu erhöhen.

Die den elektrischen Strom leitende Schicht weist vorzugsweise einen spezifischen Widerstand von 5 bis 2x10⁵ Ω cm auf. Der spezifische Widerstand kann gemäß der Lehre der DE 42 13 747 A1 bestimmt werden.

Das IR-Strahlung reflektierende Pigment weist vorzugsweise im Wellenlängenbereich von 4000 nm bis 20.000 nm ein Reflexionsvermögen von durchschnittlich mehr als 75 %, weiter bevorzugt von durchschnittlich mehr als 80 %, insbesondere von durchschnittlich mehr als 85% und vorzugsweise von durchschnittlich mehr als 90 % auf. Der Ausdruck durchschnittlich bedeutet dass über den angegebenen Wellenlängenbereich als Mittelwert eine Reflexion in dem genannten Bereich vorliegt.

Vorzugsweise weist das IR-Strahlung reflektierende Pigment eine massenmittlere Teilchengröße von kleiner als 500 µm, weiter bevorzugt von 100 µm bis 500 µm und am meisten bevorzugt von 200 µm bis 500 µm auf.

Das IR-Strahlung reflektierende Pigment kann gemäß der Lehre der DE 42 13 747 A1 hergestellt werden.

Vorzugsweise ist in der Zusammensetzung des Schrittes b) ein Initiator enthalten. Der Initiator kann vorzugsweise eine Säure oder Base sein, welche vorzugsweise eine wässrige Säure oder Base ist.

Vorzugsweise wird die Zusammensetzung des Schrittes b) hergestellt, indem zunächst eine Dispersion/Suspension der anorganischen Verbindung hergestellt wird. Nachfolgend wird dann das IR-Strahlung reflektierende Pigment eindispergiert.

Vorzugsweise wird das Trocknen der Zusammensetzung in Schritt c) durch Erwärmen auf eine Temperatur zwischen 50 °C und 1.000 °C durchgeführt. In einer bevorzugten Ausführungsform wird für 1 Minute bis 2 Stunden bei einer Temperatur von 50 °C bis 100 °C getrocknet.

In einer anderen bevorzugten Ausführungsform wird in Schritt d) für 1 Sekunde bis 10 Minuten bei einer Temperatur von 100 °C bis 800 °C getrocknet.

Das Trocknen des Schrittes c) kann mittels erwärmter Luft, Heißluft, Infrarotstrahlung, Mikrowellenstrahlung oder elektrisch erzeugter Wärme erfolgen.

In einer bevorzugten Ausführungsform ist R in der allgemeinen Formel (Z¹)Si(OR)₃ ein Alkylrest mit 1, 2, 3, 4, 5, 6, 7, 8, 9, 10, 11, 12, 13, 14, 15, 16, 17 und/oder 18 Kohlenstoffatomen.

In einer bevorzugten Ausführungsform enthält die Beschichtung des Schrittes d) ein zweites Silan der allgemeinen Formel (Z²)_{z}Si(OR)_{4-z}, wobei R ein Alkylrest mit 1 bis 6 Kohlenstoffatomen ist und Z² HₐF_{b}Cₙ, ist, wobei a und b ganze Zahlen sind, alle R gleich oder unterschiedlich sein können, a+b=1+2n ist, z = 1 oder 2 ist und n 1 bis 16 ist, oder für den Fall, dass Z¹ Gly ist, Z² Am (Am=3-Aminopropyl) mit z = 1 ist. Vorzugsweise ist n 1, 2, 3, 4, 5, 6, 7, 8, 9, 10, 11, 12, 13, 14, 15 und/oder 16. In einer bevorzugten Ausführungsform ist R in der allgemeinen Formel (Z²)Si(OR)₃ ein Alkylrest mit 1, 2, 3, 4, 5, 6, 7, 8, 9, 10, 11, 12, 13, 14, 15 und/oder 16 Kohlenstoffatomen.

In einer weiter bevorzugten Ausführungsform enthält die Beschichtung des Schrittes d) 3-Glycidyloxypropyltriethoxysilan und/oder 3-Glycidyloxypropyltrimethoxysilan als Silan und/oder 3-Aminopropyltrimethoxysilan und/oder 3-Aminopropyltriethoxysilan und/oder N-2-Aminoethyl-3-aminopropyltrimethoxysilan (DAMO) als zweites Silan. Vorzugsweise enthält die Beschichtung des Schrittes d) als Silan Tetraethoxysilan und als zweites Silan ein Silan der Formel (HₐF_{b}Cₙ)_{z}Si(OR)_{4-z}, wobei a und b ganze Zahlen sind, a+b = 1+2n ist, z 1 oder 2 ist, n 1 bis 16 ist und alle R gleich oder unterschiedlich sein können, wobei vorzugsweise alle R gleich sind und 1 bis 6 Kohlenstoffatome enthalten.

Weiter bevorzugt sind in der Beschichtung des Schrittes d) Tetraethoxysilan, Methyltriethoxysilan, Octyltriethoxysilan und/oder Hexadecyltrimethoxysilan als Silan und/oder 3,3,4,4,5,5,6,6,7,7,8,8,8-Tridecafluoroctyltriethoxysilan als zweites Silan enthalten.

In einer bevorzugten Ausführungsform ist in der Beschichtung des Schrittes d) als Initiator eine Säure oder Base enthalten, welche vorzugsweise eine wässrige Säure oder Base ist.

Vorzugsweise ist die Oberfläche der Oxidpartikel, enthalten in der Beschichtung des Schrittes d) hydrophob. An der Oberfläche der Oxidpartikel der Beschichtung des Schrittes d) sind vorzugsweise an Siliciumatome gebundene organische Reste X₁₊₂ₙCₙ vorhanden, wobei n 1 bis 20 ist und X Wasserstoff und/oder Fluor ist. Die organischen Reste können gleich oder unterschiedlich sein. Vorzugsweise ist n 1, 2, 3, 4, 5, 6, 7, 8, 9, 10, 11, 12, 13, 14, 15, 16, 17, 18, 19 und/oder 20. Vorzugsweise sind die an Siliziumatome gebundenen Gruppen Methyl-, Ethyl-, Propyl-, Butyl- und/oder Pentylgruppen. In einer besonders bevorzugten Ausführungsform sind Trimethylsilylgruppen an die Oberfläche der Oxidpartikel gebunden. Die organischen Reste können vorzugsweise abgespalten werden und weiter bevorzugt hydrolysiert werden.

Die Oxidpartikel der Beschichtung des Schrittes d) können ausgewählt sein aus den Oxiden von Ti, Si, Zr, Al, Y, Sn, Zn, Ce oder Mischungen derselben enthalten. Vorzugsweise werden die Oxidpartikel der Beschichtung des Schrittes d) unter den Reaktionsbedingungen des Schrittes d) an der Oberfläche der Oxidpartikel teilweise hydrolysiert. Hierbei bilden sich vorzugsweise reaktive Zentren, die mit den organischen Siliciumverbindungen der Beschichtung des Schrittes d) reagieren. Diese organischen Siliciumverbindungen können während der Trocknung des Schrittes e) kovalent an die Oxidpartikel durch z.B. -0-Bindungen gebunden werden. Es werden hierdurch die Oxidpartikel mit der aushärtenden Beschichtung kovalent vernetzt. Deshalb kann die Schichtdicke der aushärtenden Beschichtung überraschenderweise weiter gesteigert werden.

Die Oxidpartikel können eine mittlere Partikelgröße von 10 bis 1.000 nm, vorzugsweise von 20 bis 500 nm, weiter bevorzugt von 30 bis 250 nm aufweisen Falls die Beschichtung transparent und/oder farblos sein soll, so werden vorzugsweise nur Oxidpartikel verwendet, die eine mittlere Partikelgröße von 10 bis 250 nm aufweisen. Die mittlere Partikelgröße bezieht sich auf die Partikelgröße der Primärpartikel oder, falls die Oxide als Agglomerate vorliegen, auf die Größe der Agglomerate. Die Partikelgröße wird durch lichtstreuende Methoden bestimmt, beispielsweise durch ein Gerät des Typs HORIBA LB 550^{®} (der Firma Retsch Technology).

Vorzugsweise ist in der Beschichtung des Schrittes d) ein Polymer enthalten. In der Beschichtung des Schrittes d) hat das Polymer vorzugsweise ein mittleres massenmittleres Molekulargewicht von mindestens 3000 g/Mol. Vorzugsweise ist das mittlere massenmittlere Molekulargewicht mindestens 5000 g/Mol, weiter bevorzugt mindestens 6000 g/Mol und am meisten bevorzugt mindestens 10000 g/Mol.

Vorzugsweise hat das Polymer der Beschichtung des Schrittes d) einen mittleren Polymerisationsgrad von mindestens 50. In einer weiter bevorzugten Ausführungsform ist der mittlere Polymerisationsgrad mindestens 80, weiter bevorzugt mindestens 95 und am meisten bevorzugt mindestens 150. Vorzugsweise wird das Polymer der Beschichtung des Schrittes d) ausgewählt aus Polyamid, Polyester, Epoxidharzen, Melamin-Formaldehyd-Kondensat, Urethan-Polyol-Harz oder Mischungen derselben.

Vorzugsweise wird in Schritt d) auf das Substrat soviel der Beschichtung aufgebracht, dass nach Trocknung in Schritt e) auf dem Substrat eine Schicht der getrockneten Beschichtung mit einer Schichtdicke von 0,05 bis 10 µm vorhanden ist. Vorzugsweise ist auf dem getrockneten Substrat eine Beschichtung des Schrittes d) mit einer Schichtdicke von 0,1 µm bis 9 µm, weiter bevorzugt von 0,2 µm bis 8 µm und am meisten bevorzugt von 0,3 µm bis 7 µm vorhanden.

Das Trocknen der Beschichtung in Schritt e) kann durch jedes Verfahren durchgeführt werden, das dem Fachmann bekannt ist. Insbesondere kann die Trocknung in einem Ofen durchgeführt werden. Weiter bevorzugt ist die Trocknung mit einem Heißluftofen, Umluftofen, Mikrowellenofen oder durch Infrarotbestrahlung. Insbesondere kann vorzugsweise die Trocknung mit den Verfahren und den Trocknungszeiten des Schrittes c) durchgeführt werden. In einer bevorzugten Ausführungsform wird die Beschichtung des Schrittes e) durch Erwärmen auf eine Temperatur zwischen 50 °C und 1.000 °C getrocknet.

In einer weiter bevorzugten Ausführungsform kann vor dem Aufbringen der Beschichtung in Schritt b) und/oder d) mindestens eine weitere Beschichtung aufgebracht werden. Diese weitere Beschichtung kann z.B. ein Druck sein. Ein solcher Druck kann mit jedem Druckverfahren aufgebracht werden, das dem Fachmann geläufig ist, insbesondere dem Offset-Druckverfahren, Flexo-Druckverfahren, Tampondruck oder Inkjet-Druckverfahren.

In einer weiteren Ausführungsform kann nach dem Aufbringen der Beschichtung in Schritt d) mindestens eine weitere Beschichtung aufgebracht werden. Diese weitere Beschichtung ist nicht begrenzt und kann jede Beschichtung sein, die dem Fachmann bekannt ist. Insbesondere kann diese Beschichtung auch ein Druck sein. Auch in diesem Fall kann der Druck mit jedem Verfahren, das dem Fachmann geläufig ist, aufgebracht werden, insbesondere dem Offset-Druckverfahren, Flexo-Druckverfahren, Tampondruck und Inkjet-Druckverfahren.

Beschichtete Substrate der vorliegenden Erfindung zeigen überraschenderweise eine sehr hohe Flexibilität. Falls das Substrat flexibel ist, so kann das Substrat gebogen werden, ohne dass die aufgebrachten Beschichtungen zerstört werden oder einreißen. Insbesondere können somit Beschichtungen auf flexiblen Fliesen aufgebracht werden, die sich der Oberflächenkontur eines Untergrundes anpassen, ohne dass die Beschichtung nachteilig beeinflusst wird. Als Beschichtung können, wie bereits dargestellt, die unterschiedlichsten Schutzschichten aufgebracht werden, insbesondere Schutzschichten gegenüber aggressiven Chemikalien oder schmutzabweisende Beschichtungen. Ein Dekor ist, als weiterer Vorteil, frei wählbar.

Es ist überraschend, das die beschichteten Substrate der vorliegenden Erfindung eine ausreichende Reflektion/Abschirmung gegenüber IR-Strahlung aufweisen. Die beschichteten Substrate können als Ersatz der im Stand der Technik bekannten Mittel zur ReflektionlAbschirmung von Räumen vor IR-Strahlung verwendet werden. Außerdem sind die beschichteten Substrate der vorliegenden Erfindung effizienter herstellbar als solche des Standes der Technik.

Das beschichtete Substrat ist vorzugsweise eine Tapete zur Auskleidung von Räumen.

## Patentansprüche

1. Verfahren zur Beschichtung von Substraten, umfassend die Schritte:
a) Bereitstellung eines Substrates,
b) Aufbringung einer Zusammensetzung auf mindestens einer Seite des Substrates, die Zusammensetzung enthält eine anorganische Verbindung, wobei die anorganische Verbindung mindestens ein Metall und/oder Halbmetall ausgewählt aus der Gruppe Sc, Y, Ti, Zr, Nb, V, Cr, Mo, W, Mn, Fe, Co, B, Al, In, Tl, Si, Ge, Sn, Zn, Pb, Sb, Bi oder Mischungen derselben und mindestens ein Element ausgewählt aus der Gruppe Te, Se, S, O, Sb, As, P, N, C, Ga oder Mischungen derselben enthält,
c) Trocknen der in Schritt b) aufgebrachten Zusammensetzung,
d) Aufbringung mindestens einer Beschichtung auf der mindestens einen Seite des Substrates, auf der in Schritt b) die Zusammensetzung aufgebracht wurde, wobei die Beschichtung ein Silan der allgemeinen Formel (Z¹)Si(OR)₃, wobei Z¹ R, OR oder Gly (Gly=3-Glycidyloxypropyl) ist und R ein Alkylrest mit 1 bis 18 Kohlenstoffatomen ist und alle R gleich oder unterschiedlich sein können, Oxidpartikel, ausgewählt aus den Oxiden von Ti, Si, Zr, Al, Y, Sn, Zn, Ce oder Mischungen derselben, und einen Initiator enthält, wobei in der Beschichtung vorzugsweise 3-Aminopropyltrimethoxysilan und/oder 3-Aminopropyltriethoxysilan und/oder N-2-Aminoethyl-3-aminopropyltrimethoxysilan enthalten ist, und
e) Trocknen der in Schritt d) aufgebrachten Beschichtung,
wobei die Zusammensetzung des Schrittes b) und/oder die Beschichtung des Schrittes d) mindestens ein IR-Strahlung reflektierendes Pigment enthält und das IR-Strahlung reflektierende Pigment einen Kern aufweist, wobei auf dem Kern eine den elektrischen Strom leitende Schicht enthaltend Zinnoxide und/oder Titanoxide aufgebracht ist.

2. Das Verfahren gemäß Anspruch 1,
**dadurch gekennzeichnet,**
**dass** das Substrat in Schritt a) ein flexibles oder starres Substrat ist.

3. Das Verfahren gemäß mindestens einem der Ansprüche 1 oder 2,
**dadurch gekennzeichnet,**
**dass** das Substrat in Schritt a) ein Gewirke, ein Gewebe, ein Geflecht, eine Folie und/oder ein Flächengebilde ist.

4. Das Verfahren gemäß mindestens einem der Ansprüche 1 bis.3,
**dadurch gekennzeichnet,**
**dass** das Substrat in Schritt a) bei einer Temperatur größer als 100 °C im wesentlichen Temperaturstabil ist.

5. Das Verfahren gemäß mindestens einem der Ansprüche 1 bis 4,
**dadurch gekennzeichnet,**
**dass** das Substrat in Schritt a) unter den Trocknungsbedingungen der Schritte c) und/oder e) im wesentlichen Temperaturstabil ist.

6. Das Verfahren gemäß mindestens einem der Ansprüche 1 bis 5,
**dadurch gekennzeichnet,**
**dass** die anorganische Verbindung des Schrittes b) ausgewählt ist aus TiO₂, Al₂O₃, SiO₂, ZrO₂, Y₂O₃, BC, SiC, Fe₂O₃, SiN, SiP, Alumosilicaten, Aluminiumphosphaten, Zeolithen, partiell ausgetauschten Zeolithen oder Mischungen derselben.

7. Das Verfahren gemäß mindestens einem der Ansprüche 1 bis 6,
**dadurch gekennzeichnet,**
**dass** die anorganische Verbindung des Schrittes b) eine Korngröße von 1 nm bis 10.000 nm aufweist.

8. Das Verfahren gemäß mindestens einem der Ansprüche 1 bis 7,
**dadurch gekennzeichnet,**
**dass** die Zusammensetzung des Schrittes b) eine Suspension ist, die vorzugsweise eine wässrige Suspension ist.

9. Das Verfahren gemäß mindestens einem der Ansprüche 1 bis 8,
**dadurch gekennzeichnet,**
**dass** anorganische Verbindung des Schrittes b) durch Hydrolisieren einer Vorstufe der anorganischen Verbindung enthaltend das Metall und/oder Halbmetall erhalten wird.

10. Das Verfahren gemäß Anspruch 9,
**dadurch gekennzeichnet,**
**dass** die Vorstufe der anorganischen Verbindung ausgewählt ist aus Metallnitrat, Metallhalogenid, Metallcarbonat, Metallalkoholat, Halbmetallhalogenid, Halbmetallalkoholat oder Mischungen derselben.

11. Das Verfahren gemäß mindestens einem der Ansprüche 1 bis 10,
**dadurch gekennzeichnet,**
**dass** die den elektrischen Strom leitende Schicht des IR-Strahlung reflektierenden Pigments mit mindestens einem Halogen dotiertes Zinnoxid und/oder Titanoxid enthält, wobei das Halogen vorzugsweise ausgewählt ist aus Fluor, Chlor, Brom, Jod oder Mischungen derselben.

12. Das Verfahren gemäß mindestens einem der Ansprüche 1 bis 11,
**dadurch gekennzeichnet,**
**dass** zwischen dem Kern des IR-Strahlung reflektierenden Pigments und der den elektrischen Strom leitenden Schicht mindestens eine isolierende Schicht angeordnet ist.

13. Das Verfahren gemäß mindestens einem der Ansprüche 1 bis 12,
**dadurch gekennzeichnet,**
**dass** das IR-Strahlung reflektierenden Pigment eine massenmittlere Teilchengröße von kleiner als 500 µm, weiter bevorzugt von 100 µm bis 500 µm und am meisten bevorzugt von 200 µm bis 500 µm aufweist.

14. Das Verfahren gemäß mindestens einem der Ansprüche 12 und 13,
**dadurch gekennzeichnet,**
**dass** das Material, aus der die isolierende Schicht hergestellt ist eine Leitfähigkeit von kleiner 10⁻⁶ S/cm aufweist.

15. Das Verfahren gemäß mindestens einem der Ansprüche 1 bis 14,
**dadurch gekennzeichnet,**
**dass** die Zusammensetzung des Schrittes b) einen Initiator enthält.

16. Das Verfahren gemäß Anspruch 15,
**dadurch gekennzeichnet,**
**dass** der Initiator eine Säure oder Base ist, der vorzugsweise eine wässrige Säure oder Base ist.

17. Das Verfahren gemäß mindestens einem der Ansprüche 1 bis 16,
**dadurch gekennzeichnet,**
**dass** die Zusammensetzung des Schrittes b) ein Sol ist.

18. Das Verfahren gemäß mindestens einem der Ansprüche 1 bis 17,
**dadurch gekennzeichnet,**
**dass** das Trocknen der Zusammensetzung in Schritt c) durch Erwärmen auf eine Temperatur zwischen 50 °C und 1000 °C durchgeführt wird.

19. Das Verfahren gemäß mindestens einem der Ansprüche 1 bis 18,
**dadurch gekennzeichnet,**
**dass** die Beschichtung des Schrittes d) ein zweites Silan der allgemeinen Formel (Z²)_{z}Si(OR)_{4-z} enthält, wobei R ein Alkylrest mit 1 bis 8 Kohlenstoffatomen ist und Z² HₐF_{b}Cₙ, ist, wobei a und b ganze Zahlen sind, alle R gleich oder unterschiedlich sein können, a+b=1+2n ist, z = 1 oder 2 ist und n 1 bis 16 ist, oder für den Fall, dass Z¹ Gly ist, Z² Am (Am=3-Aminopropyl) mit z = 1 ist.

20. Das Verfahren gemäß mindestens einem der Ansprüche 1 bis 19,
**dadurch gekennzeichnet,**
**dass** die Beschichtung des Schrittes d) 3-Glycidyloxypropyltriethoxysilan und/oder 3-Glycidyloxypropyltrimethoxysilan als Silan und/oder 3-Aminopropyltrimethoxysilan und/oder 3-Aminopropyltriethoxysilan und/oder N-2-Aminoethyl-3-aminopropyltrimethoxysilan als zweites Silan enthält.

21. Das Verfahren gemäß mindestens einem der Ansprüche 1 bis 20,
**dadurch gekennzeichnet,**
**dass** die Beschichtung des Schrittes d) als Silan Tetraethoxysilan und als zweites Silan ein Silan der Formel (HₐF_{b}Cₙ)_{z}Si(OR)_{4-z} enthält, wobei a und b ganze Zahlen sind, a+b = 1 +2n ist, z 1 oder 2 ist, n 1 bis 16 ist und alle R gleich oder unterschiedlich sein können, wobei vorzugsweise alle R gleich sind und 1 bis 6 Kohlenstoffatome enthalten.

22. Das Verfahren gemäß mindestens einem der Ansprüche 1 bis 21,
**dadurch gekennzeichnet,**
**dass** die Beschichtung des Schrittes d) Tetraethoxysilan, Methyltriethoxysilan, Octyltriethoxysilan und/oder Hexadecyltrimethoxysilan als Silan und/oder 3,3,4,4,5,5,6,6,7,7,8,8,8-Tridecafluoroctyltriethoxysilan als zweites Silan enthält.

23. Das Verfahren gemäß mindestens einem der Ansprüche 1 bis 22,
**dadurch gekennzeichnet,**
**dass** die Beschichtung des Schrittes d) als Initiator eine Säure oder Base enthält, welche vorzugsweise eine wässrige Säure oder Base ist.

24. Das Verfahren gemäß mindestens einem der Ansprüche 1 bis 23,
**dadurch gekennzeichnet,**
**dass** die Oberfläche der Oxidpartikel enthalten in der Beschichtung des Schrittes d) hydrophob ist.

25. Das Verfahren gemäß mindestens einem der Ansprüche 1 bis 24,
**dadurch gekennzeichnet,**
**dass** an der Oberfläche der Oxidpartikel der Beschichtung des Schrittes d) an Siliziumatome gebundene organische Reste X₁₊₂ₙCₙ vorhanden sind, wobei n 1 bis 20 ist und X Wasserstoff und/oder Fluor ist.

26. Das Verfahren gemäß mindestens einem der Ansprüche 1 bis 25,
**dadurch gekennzeichnet,**
**dass** ein Polymer in der Beschichtung des Schrittes d) enthalten ist, welches vorzugsweise ein mittleres massenmittleres Molekulargewicht von mindestens 3000 g/mol aufweist.

27. Das Verfahren gemäß mindestens einem der Ansprüche 1 bis 26,
**dadurch gekennzeichnet,**
**dass** das Polymer der Beschichtung des Schrittes d) einen mittleren Polymerisationsgrad von mindestens 50 aufweist.

28. Das Verfahren gemäß mindestens einem der Ansprüche 1 bis 27,
**dadurch gekennzeichnet,**
**dass** das Polymer der Beschichtung des Schrittes d) ausgewählt ist aus Polyamid, Polyester, Epoxidharze, Melamin-Formaldehyd-Kondensat, Urethan-Polyol-Harz oder Mischungen derselben.

29. Das Verfahren gemäß mindestens einem der Ansprüche 1 bis 28,
**dadurch gekennzeichnet,**
**dass** in Schritt d) auf das Substrat soviel der Beschichtung aufgebracht wird, dass nach Trocknung in Schritt e) auf dem Substrat eine Schicht der getrockneten Beschichtung mit einer Schichtdicke von 0,05 bis 10 µm vorhanden ist.

30. Das Verfahren gemäß mindestens einem der Ansprüche 1 bis 29,
**dadurch gekennzeichnet,**
**dass** vor dem Aufbringen der Beschichtung in Schritt b) und/oder d) mindestens eine weitere Beschichtung aufgebracht wird.

31. Das Verfahren gemäß mindestens einem der Ansprüche 1 bis 30,
**dadurch gekennzeichnet,**
**dass** nach dem Aufbringen der Beschichtung in Schritt d) mindestens eine weitere Beschichtung aufgebracht wird.

32. Das Verfahren gemäß mindestens einem der Ansprüche 1 bis 31,
**dadurch gekennzeichnet,**
**dass** das Trocknen der Beschichtung in Schritt e) durch Erwärmen auf eine Temperatur zwischen 50 °C und 1000 °C durchgeführt wird.

33. Ein beschichtetes Substrat, erhältlich nach mindestens einem der Ansprüche 1 bis 32.

34. Das Substrat gemäß Anspruch 33,
**dadurch gekennzeichnet, dass** es eine Tapete ist.

35. Verwendung des beschichteten Substrates gemäß Anspruch 33 als Tapete.

## Claims

1. Method for coating substrates, comprising the steps of:
a) preparing a substrate,
b) applying a composition onto at least one side of the substrate, the composition containing an inorganic compound, the inorganic compound containing at least one metal and/or semimetal selected from the group Sc, Y, Ti, Zr, Nb, V, Cr, Mo, W, Mn, Fe, Co, B, Al, In, Tl, Si, Ge, Sn, Zn, Pb, Sb, Bi or mixtures thereof and at least one element selected from the group Te, Se, S, 0, Sb, As, P, N, C, Ga or mixtures thereof,
c) drying the composition applied in step b),
d) applying at least one coating onto the at least one side of the substrate onto which the composition was applied in step b), the coating containing a silane of the general formula (Z¹)Si(OR)₃, where Z¹ is R, OR or Gly (Gly=3-glycidyloxypropyl) and R is an alkyl radical having from 1 to 18 carbon atoms and all R may be identical or different, oxide particles selected from the oxides of Ti, Si, Zr, Al, Y, Sn, Zn, Ce or mixtures thereof, and an initiator, the coating preferably containing 3-aminopropyltrimethoxysilane and/or 3-aminopropyltriethoxysilane and/or N-2-aminoethyl-3-aminopropyltrimethoxysilane, and
e) drying the coating applied in step d), the composition of step b) and/or the coating of step d) containing at least one IR radiation reflecting pigment and the IR radiation reflecting pigment comprising a core, an electrical current conducting layer containing tin oxides and/or titanium oxides being applied on the core.

2. The method according to Claim 1,
**characterized in that**
the substrate in step a) is a flexible or rigid substrate.

3. The method according to at least one of Claims 1 and 2,
**characterized in that**
the substrate in step a) is a cloth, a fabric, a mesh, a foil and/or a textile.

4. The method according to at least one of Claims 1 to 3,
**characterized in that**
the substrate in step a) is essentially thermally stable at a temperature of more than 100°C.

5. The method according to at least one of Claims 1 to 4,
**characterized in that**
the substrate in step a) is essentially thermally stable under the drying conditions of step c) and/or e).

6. The method according to at least one of Claims 1 to 5,
**characterized in that**
the inorganic compound of step b) is selected from TiO₂, Al₂O₃, SiO₂, ZrO₂, Y₂O₃, BC, SiC, Fe₂O₃, SiN, SiP, alumosilicates, aluminum phosphates, zeolites, partially exchanged zeolites or mixtures thereof.

7. The method according to at least one of Claims 1 to 6,
**characterized in that**
the inorganic compound of step b) has a particle size of from 1 nm to 10,000 nm.

8. The method according to at least one of Claims 1 to 7,
**characterized in that**
the composition of step b) is a suspension, which is preferably an aqueous suspension.

9. The method according to at least one of Claims 1 to 8,
**characterized in that**
the inorganic compound of step b) is obtained by hydrolyzing a precursor of the inorganic compound containing the metal and/or semimetal.

10. The method according to Claim 9,
**characterized in that**
the precursor of the inorganic compound is selected from metal nitrate, metal halide, metal carbonate, metal alcoholate, semimetal halide, semimetal alcoholate or mixtures thereof.

11. The method according to at least one of Claims 1 to 10,
**characterized in that**
the electrical current conducting layer of the IR radiation reflecting pigment contains tin oxide and/or titanium oxide doped with at least one halogen, the halogen preferably being selected from fluorine, chlorine, bromine, iodine or mixtures thereof.

12. The method according to at least one of Claims 1 to 11,
**characterized in that**
at least one insulating layer is arranged between the core of the IR radiation reflecting pigment and the electrical current conducting layer.

13. The method according to at least one of Claims 1 to 12,
**characterized in that**
the IR radiation reflecting pigment has a mass-average particle size of less than 500 µm, more preferably from 100 µm to 500 µm and most preferably from 200 µm to 500 µm.

14. The method according to at least one of Claims 12 and 13,
**characterized in that**
the material of which the insulating layer is made has a conductivity of less than 10⁻⁶ S/cm.

15. The method according to at least one of Claims 1 to 14,
**characterized in that**
the composition of step b) contains an initiator.

16. The method according to Claim 15,
**characterized in that**
the initiator is an acid or base, which is preferably an aqueous acid or base.

17. The method according to at least one of Claims 1 to 16,
**characterized in that**
the composition of step b) is a sol.

18. The method according to at least one of Claims 1 to 17,
**characterized in that**
the drying of the composition in step c) is carried out by heating to a temperature of between 50°C and 1000°C.

19. The method according to at least one of Claims 1 to 18,
**characterized in that**
the coating of step d) contains a second silane of the general formula (Z²)_{z}Si(OR)_{4-z}, where R is an alkyl radical having from 1 to 8 carbon atoms and Z² is HₐF_{b}Cₙ, a and b being whole numbers, all R may be identical or different, a+b=1+2n, z = 1 or 2 and n is from 1 to 16, or for the case that Z¹ is Gly, Z² is Am (Am=3-aminopropyl) with z = 1.

20. The method according to at least one of Claims 1 to 19,
**characterized in that**
the coating of step d) contains 3-glycidyloxypropyltriethoxysilane and/or 3-glycidyloxypropyltrimethoxysilane as the silane and/or 3-aminopropyltrimethoxysilane and/or 3-aminopropyltriethoxysilane and/or N-2-aminoethyl-3-aminopropyltrimethoxysilane as the second silane.

21. The method according to at least one of Claims 1 to 20,
**characterized in that**
the coating of step d) contains tetraethoxysilane as the silane and a silane of the formula (HₐF_{b}Cₙ)_{z}Si(OR)_{4-z} as the second silane, where a and b are whole numbers, a+b = 1+2n, z is 1 or 2, n is from 1 to 16 and all R may be identical or different, all R preferably being identical and containing from 1 to 6 carbon atoms.

22. The method according to at least one of Claims 1 to 21,
**characterized in that**
the coating of step d) contains tetraethoxysilane, methyltriethoxysilane, octyltriethoxysilane and/or hexadecyltrimethoxysilane as the silane and/or 3,3,4,4,5,5,6,6,7,7,8,8,8-tridecafluoroctyltriethoxysilane as the second silane.

23. The method according to at least one of Claims 1 to 22,
**characterized in that**
the coating of step d) contains an acid or base as initiator, which is preferably an aqueous acid or base.

24. The method according to at least one of Claims 1 to 23,
**characterized in that**
the surface of the oxide particles contained in the coating of step d) is hydrophobic.

25. The method according to at least one of Claims 1 to 24,
**characterized in that**
there are organic radicals X₁₊₂ₙCₙ bound to silicon atoms on the surface of the oxide particles of the coating of step d), when n is from 1 to 20 and X is hydrogen and/or fluorine.

26. The method according to at least one of Claims 1 to 25,
**characterized in that**
the coating of step d) contains a polymer which preferably has a mean mass-average molecular weight of at least 3000 g/mol.

27. The method according to at least one of Claims 1 to 26,
**characterized in that**
the polymer of the coating of step d) has an average degree of polymerization of at least 50.

28. The method according to at least one of Claims 1 to 27,
**characterized in that**
the polymer of the coating of step d) is selected from polyamide, polyester, epoxy resins, melamineformaldehyde condensate, urethane-polyol resin or mixtures thereof.

29. The method according to at least one of Claims 1 to 28,
**characterized in that**
enough coating is applied onto the substrate in step d) for there to be a layer of the dried coating with a layer thickness of from 0.05 to 10 µm after drying in step e).

30. The method according to at least one of Claims 1 to 29,
**characterized in that**
at least one further coating is applied before the application of the coating in step b) and/or d).

31. The method according to at least one of Claims 1 to 30,
**characterized in that**
at least one further coating is applied after the application of the coating in step d).

32. The method according to at least one of Claims 1 to 31,
**characterized in that**
the drying of the coating in step e) is carried out by heating to a temperature of between 50°C and 1000°C

33. The coated substrate which can be obtained according to at least one of Claims 1 to 32.

34. The substrate according to Claim 33,
**characterized in that** it is wallpaper.

35. Use of the coated substrate according to Claim 33 as wallpaper.

## Revendications

1. Procédé pour le revêtement de substrats, comprenant les étampes :
a) préparation d'un substrat,
b) application d'une composition sur au moins une face du substrat, la composition contenant au moins un composé inorganique, où le composé inorganique contient au moins un métal et/ou semi-métal choisi dans le groupe formé par Sc, Y, Ti, Zr, Nb, V, Cr, Mo, W, Mn, Fe, Co, B, Al, In, Ti, Si, Ge, Sn, Zn, Pb, Sb, Bi ou des mélanges de ceux-ci et au moins un élément choisi dans le groupe formé par Te, Se, S, 0, Sb, As, P, N, C, Ga ou des mélanges de ceux-ci,
c) séchage de la composition appliquée dans l'étape b),
d) application d'au moins un revêtement sur ladite au moins une face du substrat, sur laquelle la composition a été appliquée lors de l'étape b), où le revêtement contient un silane de formule générale (Z¹)Si(OR)₃, où Z¹ représente R, OR ou Gly (Gly = 3-glycidyloxypropyle) et R représente un radical alkyle comprenant 1 à 18 atomes de carbone et tous les R peuvent être identiques ou différents, des particules d'oxydes choisis parmi les oxydes de Ti, Si, Zr, Al, Y, Sn, Zn, Ce ou leurs mélanges et un initiateur, où le revêtement contient de préférence du 3-aminopropyltriméthoxysilane et/ou du 3-aminopropyltriéthoxysilane et/ou du N-2-aminoéthyl-3-aminopropyltriméthoxysilane, et
e) séchage du revêtement appliqué dans l'étape d),
où la composition de l'étape b) et/ou le revêtement de l'étape d) contient au moins un pigment réfléchissant le rayonnement IR et le pigment réfléchissant le rayonnement IR présente un noyau, où on a appliqué, sur le noyau, une couche conduisant le courant électrique, contenant des oxydes d'étain et/ou des oxydes de titane.

2. Procédé selon la revendication 1, **caractérisé en ce que** le substrat dans l'étape a) est un substrat souple ou rigide.

3. Procédé selon au moins l'une quelconque des revendications 1 ou 2, **caractérisé en ce que** le substrat dans l'étape a) est un tricot, un tissu, un treillis, une feuille et/ou une structure plane.

4. Procédé selon au moins l'une quelconque des revendications 1 à 3, **caractérisé en ce que** le substrat dans l'étape a) est essentiellement stable à la température à une température supérieure à 100°C.

5. Procédé selon au moins l'une quelconque des revendications 1 à 4, **caractérisé en ce que** le substrat dans l'étape a) est essentiellement stable à la température dans les conditions de séchage de l'étape c) et/ou e).

6. Procédé selon au moins l'une quelconque des revendications 1 à 5, **caractérisé en ce que** le composé inorganique de l'étape b) est choisi parmi TiO₂, Al₂O₃, SiO₂, ZrO₂, Y₂O₃, BC, SiC, Fe₂O₃, SiN, SiP, les aluminosilicates, les phosphates d'aluminium, les zéolithes, les zéolithes partiellement échangées ou leurs mélanges.

7. Procédé selon au moins l'une quelconque des revendications 1 à 6, **caractérisé en ce que** le composé inorganique de l'étape b) présente une granulométrie de 1 nm à 10 000 nm.

8. Procédé selon au moins l'une quelconque des revendications 1 à 7, **caractérisé en ce que** la composition de l'étape b) est une suspension, qui est de préférence une suspension aqueuse.

9. Procédé selon au moins l'une quelconque des revendications 1 à 8, **caractérisé en ce que** le composé inorganique de l'étape b) est obtenu par hydrolyse d'un précurseur du composé inorganique, contenant le métal et/ou le semi-métal.

10. Procédé selon la revendication 9, **caractérisé en ce que** le précurseur du composé inorganique est choisi parmi un nitrate de métal, un halogénure de métal, un carbonate de métal, un alcoolate de métal, un halogénure semi-métallique, un alcoolate semi-métallique ou leurs mélanges.

11. Procédé selon au moins l'une quelconque des revendications 1 à 10, **caractérisé en ce que** la couche conduisant le courant électrique du pigment réfléchissant le rayonnement IR contient de l'oxyde d'étain et/ou de l'oxyde de titane dopé avec au moins un halogène, où l'halogène est de préférence choisi parmi le fluor, le chlore, le brome, l'iode ou leurs mélanges.

12. Procédé selon au moins l'une quelconque des revendications 1 à 11, **caractérisé en ce qu'**au moins une couche isolante est disposée entre le noyau du pigment réfléchissant le rayonnement IR et la couche conduisant le courant électrique.

13. Procédé selon au moins l'une quelconque des revendications 1 à 12, **caractérisé en ce que** le pigment réfléchissant le rayonnement IR présente une grosseur massique moyenne des particules inférieure à 500 µm, plus préférablement de 100 µm à 500 µm et le plus préférablement de 200 µm à 500 µm.

14. Procédé selon au moins l'une quelconque des revendications 12 et 13, **caractérisé en ce que** le matériau à partir duquel la couche isolante est réalisée présente une conductibilité inférieure à 10⁻⁶ S/cm.

15. Procédé selon au moins l'une quelconque des revendications 1 à 14, **caractérisé en ce que** la composition de l'étape b) contient un initiateur.

16. Procédé selon la revendication 15, **caractérisé en ce que** l'initiateur est un acide ou une base qui est de préférence un acide aqueux ou une base aqueuse.

17. Procédé selon au moins l'une quelconque des revendications 1 à 16, **caractérisé en ce que** la composition de l'étape b) est un sol.

18. Procédé selon au moins l'une quelconque des revendications 1 à 17, **caractérisé en ce que** le séchage de la composition dans l'étape c) est réalisé par chauffage à une température entre 50°C et 1000°C.

19. Procédé selon au moins l'une quelconque des revendications 1 à 18, **caractérisé en ce que** le revêtement de l'étape d) contient un deuxième silane de formule générale (Z²)_{z}Si(OR)_{4-z}, où R représente un radical alkyle comprenant 1 à 8 atomes de carbone et Z² représente HₐF_{b}Cₙ, où a et b sont des nombres entiers, tous les R peuvent être identiques ou différents, a + b = 1 + 2n, z = 1 ou 2 et n = 1 à 16, ou pour le cas où Z¹ représente Gly, Z² représente Am (Am = 3-aminopropyle) avec z = 1.

20. Procédé selon au moins l'une quelconque des revendications 1 à 19, **caractérisé en ce que** le revêtement de l'étape d) contient du 3-glycidyloxypropyltriéthoxysilane et/ou du 3-glycidyloxypropyltriméthoxysilane comme silane et/ou du 3-aminopropyltriméthoxysilane et/ou du 3-aminopropyltriéthoxysilane et/ou du N-2-aminoéthyl-3-aminopropyltriméthoxysilane comme deuxième silane.

21. Procédé selon au moins l'une quelconque des revendications 1 à 20, **caractérisé en ce que** le revêtement de l'étape d) contient comme silane du tétraéthoxysilane et comme deuxième silane un silane de formule (HₐF_{b}Cₙ)_{z}Si(OR)_{4-z}, où a et b sont des nombres entiers, a + b = 1 + 2n, z vaut 1 ou 2, n vaut 1 à 16 et tous les R peuvent être identiques ou différents, où de préférence tous les R sont identiques et contiennent 1 à 6 atomes de carbone.

22. Procédé selon au moins l'une quelconque des revendications 1 à 21, **caractérisé en ce que** le revêtement de l'étape d) contient du tétraéthoxysilane, du méthyltriéthoxysilane, de l'octyltriéthoxysilane et/ou de l'hexadécyltriméthoxysilane comme silane et/ou du 3,3,4,4,5,5,6,6,7,7,8,8,8-tridécafluoroctyltriéthoxysilane comme deuxième silane.

23. Procédé selon au moins l'une quelconque des revendications 1 à 22, **caractérisé en ce que** le revêtement de l'étape d) contient comme initiateur un acide ou une base qui est de préférence un acide aqueux ou une base aqueuse.

24. Procédé selon au moins l'une quelconque des revendications 1 à 23, **caractérisé en ce que** la surface des particules d'oxyde contenues dans le revêtement de l'étape d) est hydrophobe.

25. Procédé selon au moins l'une quelconque des revendications 1 à 24, **caractérisé en ce que** radicaux X₁₊₂ₙCₙ organiques liés à des atomes de silicium sont présents à la surface des particules d'oxyde du revêtement de l'étape d), où n vaut 1 à 20 et X représente hydrogène et/ou fluor.

26. Procédé selon au moins l'une quelconque des revendications 1 à 25, **caractérisé en ce qu'**un polymère est contenu dans le revêtement de l'étape d), qui présente de préférence un poids moléculaire massique moyen d'au moins 3000 g/mole.

27. Procédé selon au moins l'une quelconque des revendications 1 à 26, **caractérisé en ce que** le polymère du revêtement de l'étape d) présente un degré de polymérisation moyen d'au moins 50.

28. Procédé selon au moins l'une quelconque des revendications 1 à 27, **caractérisé en ce que** le polymère du revêtement de l'étape d) est choisi parmi un polyamide, un polyester, une résine époxyde, un produit de condensation de mélamine-formaldéhyde, une résine d'uréthane-polyol ou leurs mélanges.

29. Procédé selon au moins l'une quelconque des revendications 1 à 28, **caractérisé en ce que** dans l'étape d), la quantité de revêtement appliquée sur le substrat est telle qu'une couche de revêtement séché présentant une épaisseur de couche de 0,05 à 10 µm est présente sur le substrat après le séchage dans l'étape e).

30. Procédé selon au moins l'une quelconque des revendications 1 à 29, **caractérisé en ce qu'**au moins un autre revêtement est appliqué avant l'application du revêtement dans l'étape b) et/ou d).

31. Procédé selon au moins l'une quelconque des revendications 1 à 30, **caractérisé en ce qu'**au moins un autre revêtement est appliqué après l'application du revêtement dans l'étape d).

32. Procédé selon au moins l'une quelconque des revendications 1 à 31, **caractérisé en ce que** le séchage du revêtement dans l'étape e) est réalisé par chauffage à une température entre 50°C et 1000°C.

33. Substrat revêtu, pouvant être obtenu selon au moins l'une quelconque des revendications 1 à 32.

34. Substrat selon la revendication 33, **caractérisé en ce qu'**il s'agit d'un tapis.

35. Utilisation du substrat revêtu selon la revendication 33 comme tapis.
